# EUROPÄISCHE PATENTSCHRIFT

(11) **EP 1 267 240 B1**
(45) Veröffentlichungstag und Bekanntmachung des Hinweises auf die Patenterteilung: **08.09.2004**
(21) Anmeldenummer: 01114298.1
(22) Anmeldetag: 13.06.2001
(51) Int. Cl.: G05G 5/05, F16H 61/24

(54) **Gangwechselvorrichtung für ein handschaltbares Getriebe eines Kraftfahrzeuges**
Gear change device for a manual transmission of a motor vehicle
Changement de vitesse pour une boîte de vitesses manuelle d'un véhicule automobile

(43) Veröffentlichungstag der Anmeldung: 18.12.2002
(73) Patentinhaber: Getrag Ford Transmissions GmbH, 50735 Köln (DE)
(72) Erfinder: Voss, Markus H., D-53179 Bonn (DE); Atug, Daniel, D-51688 Wipperfuerth (DE)
(74) Vertreter: Steil, Christian, Dipl.-Ing.

(56) Entgegenhaltungen:
- DE-A- 1 500 367
- DE-A- 19 520 209
- GB-A- 1 583 901
- PATENT ABSTRACTS OF JAPAN vol. 1996, no. 02, 29. Februar 1996 (1996-02-29) -& JP 07 269697 A (TOYOTA MOTOR CORP), 20. Oktober 1995 (1995-10-20)
- PATENT ABSTRACTS OF JAPAN vol. 010, no. 324 (P-512), 5. November 1986 (1986-11-05) & JP 61 131016 A (HINO MOTORS LTD), 18. Juni 1986 (1986-06-18)

## Beschreibung

Die vorliegende Erfindung betrifft eine Gangwechselvorrichtung für ein handschaltbares Getriebe eines Kraftfahrzeuges mit einem Gangwechselhebel, der in einem H-Gangwechselschema mit einer Wählgasse und wenigstens drei Schaltgassen beweglich ist und von einem Führer des Kraftfahrzeuges betätigbar ist, einer Schalteinrichtung, die mit dem Gangwechselhebel gekoppelt ist und dazu dient, Schaltbewegungen des Gangwechselhebels innerhalb der jeweiligen Schaltgassen zu dem Getriebe zu übertragen, einer Wähleinrichtung, die mit dem Gangwechselhebel gekoppelt ist und dazu dient, Wählbewegungen des Gangwechselhebels innerhalb der Wählgasse zu dem Getriebe zu übertragen, und einer Rückstelleinrichtung, die den Gangwechselhebel innerhalb der Wählgasse in eine zentrale Wählposition elastisch vorspannt, die einer mittleren der wenigstens drei Schaltgassen zugeordnet ist, wobei die Rückstelleinrichtung asymmetrisch ausgelegt ist, derart, daß einer Wählbewegung des Gangwechselhebels aus der zentralen Wählposition je nach Wählrichtung eine andere Gegenkraft entgegenwirkt.

Eine derartige Gangwechselvorrichtung ist bekannt aus der DE 195 20 209 A1.

Das bei derartigen Gangwechselvorrichtungen in der Regel implementierte H-Gangwechselschema ist allgemein bekannt. Die Wähleinrichtung der Gangwechselvorrichtung umfaßt in der Regel ein schwenkbares Element, das getrieblich mit dem Gangwechselhebel gekoppelt ist. Bei der US 5,560,253 weist die Rückstelleinrichtung eine Schraubenfeder auf, die um eine Drehachse des Schwenkelementes herum gelagert ist und sich am Gehäuse abstützt. Durch die Kraft dieser einzelnen Feder wird der Gangwechselhebel über die getriebliche Kopplung mit dem Schwenkelement im unbelasteten Zustand in die zentrale Wählposition vorgespannt.

Eine weitere Gangwechselvorrichtung der gattungsgemäßen Art ist bekannt aus dem US-Patent 4,458,549. Diese Gangwechselvorrichtung ist insbesondere für automatisierte Handschaltgetriebe ausgelegt. Eine Torsionsfeder in der Wähleinrichtung erzeugt gleich große Rückstellkräfte aus hoher und niedriger Wählposition. Dies soll die Nachteile von einzelnen Federn zur Erzielung von Rückstellkräften aus der hohen bzw. niedrigen Wählposition vermeiden. Bei dieser Druckschrift ist daher eine einzelne Feder für beide Rückstellrichtungen vorgesehen.

Die europäische Patentveröffentlichung EP 07 47 612 B1 offenbart eine weitere Gangwechselvorrichtung. Details zu einer Rückstelleinrichtung sind jedoch nicht gezeigt.

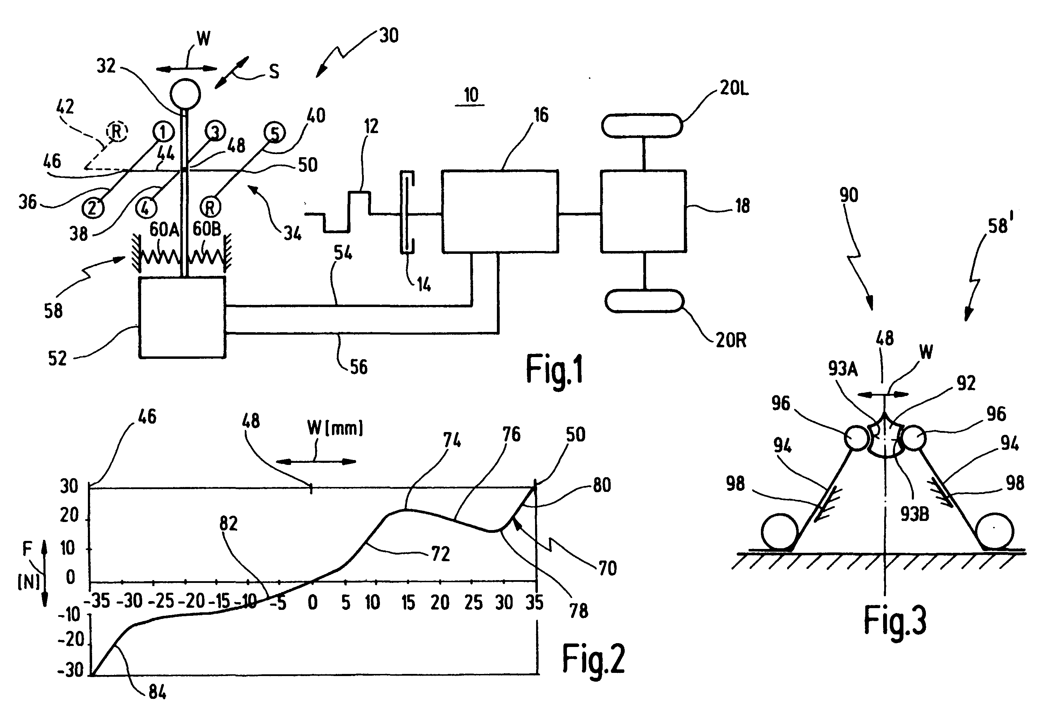

Das US-Patent 4,543,842 schließlich offenbart eine weitere Gangwechselvorrichtung der gattungsgemäßen Art mit einer Rückstelleinrichtung, die durch eine Schraubenfeder realisiert ist. Die Schraubenfeder stützt sich gehäusefest ab und drückt elastisch auf gegenüberliegende Seiten eines Wählstiftes. Je nach Wählrichtung ausgehend von der zentralen Wählposition wird entweder die linke oder die rechte Seite der Schraubenfeder komprimiert, die andere hingegen entspannt. Hierdurch läßt sich eine lineare und in bezug auf die zentrale Wählposition symmetrische Gegenkraft-Wählweg-Charakteristik für den Gangwechselhebel realisieren, wie es in der dortigen Fig. 2 gezeigt ist.

Die aus der DE 195 20 209 A1 bekannte Gangwechselvorrichtung weist einen verschwenkbar gelagerten Hebel mit Kontaktstiften auf, an denen unterschiedliche Armabschnitte einer Torsionsfeder angreifen. Durch unterschiedliche Längen zwischen der Drehachse des Hebels und den Kontaktstiften wird, je nach Verschwenkrichtung des Hebels, eine verschiedene Gegenkraft erzeugt. Aus der GB-A-1583901 ist eine weitere Gangwechselvorrichtung bekannt, die für Nutzfahrzeuge ausgelegt ist. Es sind insgesamt fünf Schaltgassen vorgesehen, eine für den Rückwärtsgang und vier Schaltgassen für die Vorwärtsgänge 1/2, 3/4, 5/6 bzw. 7/8. Die Rückstelleinrichtung ist so ausgelegt, daß der Gangwechselhebel entweder in die Gasse 3/4 oder in die Gasse 5/6 elastisch vorgespannt wird. Zum Wechseln der Schaltgasse von 3/4 nach 5/6 bzw. umgekehrt ist eine höhere Schaltkraft aufzuwenden als bei einem Wechsel beispielsweise von der Schaltgasse 3/4 nach 1/2 oder von 5/6 nach 7/8. Zum Einlegen des Rückwärtsganges ist eine noch höhere Schaltkraft erforderlich.

Durch den Gedanken, die Rückstelleinrichtung asymmetrisch auszulegen, ergibt sich eine verbesserte Ergonomie bei der Betätigung der Gangwechselvorrichtung durch einen Fahrer des Kraftfahrzeuges.

Gegenüber diesem Stand der Technik besteht das der Erfindung zugrunde liegende Problem darin, eine verbesserte Gangwechselvorrichtung anzugeben.

Diese Aufgabe wird bei der eingangs genannten Gangwechselvorrichtung dadurch gelöst, daß die Rückstelleinrichtung wenigstens ein getrieblich mit dem Gangwechselhebel gekoppeltes Element und zwei elastisch daran anliegende Anlageelemente aufweist, die ein Kurvengetriebe zur Errichtung einer Gegenkraft-Wählweg-Charakteristik bilden, deren Verlauf eine Funktion des Kurvenverlaufs zwischen dem Koppelelement und den Anlageelementen ist, wobei die Anlageelemente an jeweiligen Federn gelagert sind und von den Federn in die zwei entgegengesetzten Wählrichtungen an das Koppelelement elastisch angedrückt werden, und wobei für die Federn jeweils ein Anschlag vorgesehen ist, derart, daß bei Wählbewegungen des Gangwechselhebels ausgehend von der zentralen Wählposition jeweils nur eine der Federn auf den Gangwechselhebel wirkt.

Hierdurch wird für jede der Wählrichtungen ausgehend von der zentralen Wählposition eine definierte Charakteristik eingerichtet, die von der jeweils nicht belasteten Feder unbeeinflußt bleibt.

Durch die Bildung eines Kurvengetriebes zur Einrichtung einer Gegenkraft-Wählweg-Charakteristik, deren Verlauf eine Funktion des Kurvenverlaufes zwischen dem Koppelelement und den Anlageelementen ist, läßt sich auf konstruktiv günstige Weise ein beliebiger Wählkraftverlauf, insbesondere ein nichtlinearer und/oder ein asymmetrischer Wählkraftverlauf realisieren.

Durch die Verwendung von zwei Federn, die die Anlageelemente in entgegengesetzte Richtungen an das Kurvenelement elastisch andrücken, läßt sich eine asymmetrische Charakteristik der Rückstelleinrichtung besonders einfach realisieren, da in diesem Fall auf einfache Weise zwischen dem Koppelelement und den Anlageelementen zwei unterschiedliche Gegenkraft-Wählweg-Charakteristika einrichtbar sind.

Besonders bevorzugt ist es, wenn die Schaltgassen eine zentrale Schaltgasse für die Gänge 3/4, die der zentralen Wählposition entspricht, eine linke Schaltgasse für die Gänge 1/2 entsprechend einer linken Wählposition sowie eine rechte Schaltgasse für wenigstens den 5. Gang entsprechend einer rechten Wählposition aufweisen.

Die Erfindung ist insbesondere auf dieses an sich bekannte H-Gangwechselschema anwendbar. Es versteht sich jedoch, daß auch noch weitere Schaltgassen, bspw. eine separate Schaltgasse für den Rückwärtsgang links neben der Gasse für die Gänge 1/2 vorhanden sein kann. Ferner kann in der rechten Schaltgasse auch ein Rückwärtsgang oder ein sechster Gang angeordnet sein. Ein Rückwärtsgang kann auch in einer weiteren Schaltgasse noch weiter rechts neben der Schaltgasse vom 5. und ggf. 6. Gang vorhanden sein.

Auch ist eine Anwendung der Erfindung auf andere Schaltgassenschemata möglich.

Bei dem herkömmlichen H-Gangwechselschema mit der zentralen Position in Entsprechung zur Schaltgasse für die Gänge 3/4 ist die asymmetrische Auslegung der Rückstelleinrichtung von besonderem Vorzug. Untersuchungen haben gezeigt, daß es für die Fahrer der Kraftfahrzeuge ergonomisch besonders sinnvoll ist, wenn die Gegenkraft hin zu der Schaltgasse für die Gänge 1/2 anders ausgelegt wird als die Gegenkraft hin zu der Schaltgasse für den Gang 5 (und ggf. 6).

Gemäß einer weiteren besonders bevorzugten Ausführungsform richtet die Rückstelleinrichtung eine Gegenkraft-Wählweg-Charakteristik ein, die in wenigstens einer der Wählrichtungen über den Wählweg zwischen der zentralen Wählposition und der jeweiligen Schaltgasse nichtlinear ist.

Bislang wird die Rückstellkraft bei bekannten Gangwechselvorrichtungen über eine Feder realisiert, deren Kraft-Weg-Charakteristik im wesentlichen linear ist. Dies führt im Stand der Technik dazu, daß die Kraft zum Bewegen des Gangwechselhebels um so größer ist, je weiter dieser bereits gegenüber der zentralen Wählposition in Wählrichtung bewegt ist.

Bei der vorliegenden Erfindung hingegen wird durch die nichtlineare Gegenkraft-Wählweg-Charakteristik ein ergonomischerer Kraft-Weg-Kennlinienverlauf möglich. So ist es bspw. möglich, die Charakteristik so auszulegen, daß der Kraftanstieg aus der zentralen Wählposition heraus zunächst linear verläuft, bis hin zu einer Maximalkraft, die noch vor dem Erreichen der jeweiligen Schaltgasse liegt.

Besonders bevorzugt ist es, wenn die Rückstelleinrichtung eine Gegenkraft-Wählweg-Charakteristik für den Gangwechselhebel einrichtet, die so ausgelegt ist, daß einer Wählbewegung des Gangwechselhebels zu einer linken Wählposition hin eine geringere Gegenkraft entgegengesetzt wird als zu einer rechten Wählposition hin.

Die linke Wählposition ist vorzugsweise jene für die Gänge 1/2 und die rechte jene für den 5. Gang (und ggf. den 6. oder den Rückwärtsgang).

Folglich muß der Fahrer bei dem häufig benötigten Wechsel zwischen der zentralen Schaltgasse und der linken Schaltgasse (also innerhalb der Gänge 1-4) nur relativ wenig Kraft aufwenden, um einen Wählvorgang durchzuführen. Für den Wählvorgang hin zu der (seltener benötigten) Schaltgasse für den 5. (und ggf. 6. oder Rückwärtsgang) hingegen ist eine höhere Kraft erforderlich. Hierdurch wird es für den Fahrer leichter möglich, zwischen der Schaltgasse für die Gänge 3/4 und jener für den 5. Gang zu unterscheiden. Insofern können Unsicherheiten verhindert werden, ob die Gasse für den 5. Gang überhaupt angewählt ist oder versehentlich der 3. Gang eingelegt ist.

Ferner ist es bevorzugt, wenn die Rückstelleinrichtung eine Gegenkraft-Wählweg-Charakteristik für den Gangwechselhebel einrichtet, die so ausgelegt ist, daß die Gegenkraft bei einer Wählbewegung des Gangwechselhebels zu einer, vorzugsweise der rechten Wählposition hin zunächst mit dem Wählweg ansteigt und noch vor Erreichen der Schaltgasse wieder abfällt.

Auf diese Weise kann erreicht werden, daß für den Wählvorgang anfänglich eine relativ hohe Gegenkraft zu überwinden ist, so daß bspw. eine eindeutige Unterscheidung getroffen werden kann, ob der Fahrer in den 3. oder den 5. Gang schaltet. Sobald diese relativ hohe Gegenkraft überwunden ist, wird aus Gründen der Erleichterung der Wählbetätigung diese Gegenkraft wieder verringert, so daß sich die Gänge trotz der verbesserten Erkennbarkeit des aktuellen Zustandes mit insgesamt geringem Kraftaufwand schalten lassen.

Ferner ist es besonders bevorzugt, wenn das Anlageelement eine drehbar gelagerte Rolle aufweist.

Auf diese Weise wird die Reibung zwischen dem Koppelelement und dem Anlageelement minimiert und der Verschleiß verringert.

Insgesamt ist es von Vorzug, wenn der Kurvenverlauf des Kurvengetriebes, die Beweglichkeit des Koppelelements und die elastische Lagerung des Anlageelementes so ausgelegt sind, daß sich bei einer Wählbewegung ein nichtlinearer Kraftverlauf einstellt.

Insgesamt ist durch diese genannten Parameter ein beliebiger Wählkraftverlauf realisierbar. So ist es bspw. auch möglich, daß der Kraftverlauf in jeder der beiden Richtungen linear verläuft, jedoch mit unterschiedlichen Steigungen, so daß sich eine zwar abstandsweise lineare, jedoch asymmetrische Charakteristik ergibt.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einem handschaltbaren Getriebe, das mit einer erfindungsgemäßen Gangwechselvorrichtung versehen ist;
- Fig. 2: eine Gegenkraft-Wählweg-Charakteristik der Rückstelleinrichtung aus Fig. 1;
- Fig. 3: eine schematische Seitenansicht einer abgewandelten Ausführungsform einer Rückstelleinrichtung;
- Fig. 4: eine schematische Seitenansicht einer weiteren alternativen Ausführungsform einer Rückstelleinrichtung;
- Fig. 5: eine schematische Draufsicht auf die Ausführungsform der Fig. 4;
- Fig. 6: eine schematische Seitenansicht einer weiteren alternativen Ausführungsform einer Rückstelleinrichtung;
- Fig. 7: eine schematische Seitenansicht einer weiteren alternativen Ausführungsform einer Rückstelleinrichtung;
- Fig. 8: eine schematische Seitenansicht einer weiteren alternativen Ausführungsform einer Rückstelleinrichtung; und
- Fig. 9: eine perspektivische Seitenansicht einer Konstruktion einer erfindungsgemäßen Gangwechselvorrichtung.

In Fig. 1 ist ein Kraftfahrzeug generell mit 10 bezeichnet.

Das Kraftfahrzeug weist einen Verbrennungsmotor 12 auf sowie ein Getriebe 16, das mit dem Verbrennungsmotor 12 über eine Anfahr- und Trennkupplung 14 verbunden ist. Ausgangsseitig ist das Getriebe 16 mit einem Achsgetriebe 18 verbunden und dieses wiederum ist mit angetriebenen Rädern 20L und 20R verbunden.

Bei dem Kraftfahrzeug 10 kann es sich um ein beliebiges Kraftfahrzeug, insbesondere jedoch um einen Personenkraftwagen handeln.

Das Getriebe 16 ist bei dieser Ausführungsform ein herkömmliches Stufengetriebe in Vorgelegebauweise mit fünf Vorwärtsgängen und einem Rückwärtsgang. Es versteht sich, daß die Erfindung auch auf Getriebe 16 mit mehr als 5 Gängen anwendbar ist.

Die Gänge des Getriebes 16 lassen sich von Hand über eine Gangwechselvorrichtung 30 ein- und auslegen.

Die Gangwechselvorrichtung 30 weist einen Gangwechselhebel 32 auf. Der Gangwechselhebel 32 ist in einem an sich bekannten H-Gangwechselschema 34 beweglich ausgebildet und ragt üblicherweise in den Fahrgastraum des Kraftfahrzeuges 10 hinein, so daß er von einem Fahrer des Kraftfahrzeuges 10 betätigbar ist.

Das H-Gangwechselschema 34 umfaßt eine linke Schaltgasse 36 für die Gänge eins und zwei, eine mittlere Schaltgasse 38 für die Gänge drei und vier sowie eine rechte Schaltgasse 40 für den fünften Gang und den Rückwärtsgang R.

Alternativ hierzu kann der Rückwärtsgang auch in einer weiteren Schaltgasse 42 links von der Schaltgasse 36 angeordnet sein, wie dies bei manchen Kraftfahrzeugen realisiert ist. In diesem Fall könnte in der Schaltgasse 40 an der Position des Rückwärtsganges R ein sechster Gang vorgesehen sein.

Die drei Schaltgassen 36-40 sind mittels einer Wählgasse 44 miteinander verbunden.

Die Wählgasse beinhaltet eine linke Wählposition 46, die der linken Schaltgasse 36 entspricht, eine zentrale Wählposition 48, die der mittleren Schaltgasse 38 entspricht, sowie eine rechte Wählposition 50, die der rechten Schaltgasse 40 entspricht.

Diese Art von H-Gangwechselschema beruht auf einer allgemeinen Übereinkunft und ist in nahezu allen Fahrzeugen mit Handschaltgetriebe so implementiert. Es versteht sich jedoch, daß die Anordnung von Gängen in diesem H-Gangwechselschema 34 generell beliebig ist.

Die Gangwechselvorrichtung 30 weist ferner eine kombinierte Schalt-/Wähleinrichtung 52 auf. Die Schalt-/Wähleinrichtung 52 ist eingangsseitig mit dem Gangwechselhebel 32 verbunden. Ausgangsseitig ist die Schalt-/Wähleinrichtung 52 über eine Wählkoppeleinrichtung 54 sowie über eine Schaltkoppeleinrichtung 56 mit dem Getriebe 16 gekoppelt.

Die Bewegungen des Gangwechselhebel 32 innerhalb der Wählgasse 44 werden über die Wählkoppeleinrichtung 54 an das Getriebe 16 weitergeleitet. Dort wird in der Regel über eine Schaltwelle oder eine äquivalente Einrichtung eine bestimmte Schaltmuffe angewählt.

Bewegungen des Gangwechselhebel 32 innerhalb der Schaltgassen 36-40 werden mittels der Schaltkoppeleinrichtung 56 an das Getriebe 16 geleitet und dort in Bewegungen der angewählten Schaltmuffe umgesetzt, um einen Gang ein- oder auszulegen.

Die Wählkoppeleinrichtung 54 und die Schaltkoppeleinrichtung 56 können rein mechanische Koppeleinrichtungen, wie bspw. Bowdenzüge sein. Es versteht sich jedoch, daß die Kopplung auch "over-the-wire" erfolgen kann, sofern an dem Getriebe 16 geeignete Aktuatoren vorgesehen sind. Gleiches gilt dem Grunde nach für die Verbindung zwischen dem Gangwechselhebel 32 und der Schalt-/Wähleinrichtung 52.

Es versteht sich, daß das Getriebe 16 über geeignete Schaltkupplungen zum Ein- und Auslegen der Gänge verfügt. Hierbei kann es sich um nicht synchronisierte Schaltkupplungen handeln. Vorzugsweise werden die Gänge des Getriebes 16 jedoch über Synchroneinrichtungen geschaltet.

Der Gangwechselhebel 32 wird mittels einer Rückstelleinrichtung 58 innerhalb der Wählgasse 44 generell in die zentrale Wählposition 48 vorgespannt.

Um dies zu verdeutlichen, sind in Fig. 1 schematisch zwei Federn 60A, 60B gezeigt, die von der Richtung der linken Wählposition 46 bzw. von Richtung der rechten Wählposition 50 elastisch auf den Gangwechselhebel 32 einwirken.

Die Rückstelleinrichtung 58 ist so ausgelegt, daß sich die in Fig. 2 gezeigte Gegenkraft-Wählweg-Charakteristik einstellt.

In Fig. 2 ist auf der Abszisse der Wählweg W aufgetragen, mit den Wählpositionen 46, 48, 50.

Auf der Ordinate ist die Gegenkraft bzw. Rückstellkraft F aufgetragen, die der Wählbewegung W entgegenwirkt. Diese Gegenkraft entspricht der von dem Fahrer aufzubringenden Wählkraft, die zum Bewegen des Gangwechselhebels 32 entlang der Wählgasse 44 notwendig ist.

Zunächst ist der Charakteristik zu entnehmen, daß die Rückstelleinrichtung 58 in jeder Position außer der zentralen Wählposition 48 eine Kraft F auf den Gangwechselhebel 32 ausübt. Hierdurch wird der Gangwechselhebel 32 innerhalb der Wählgasse 44 in die zentrale Wählposition 48 vorgespannt.

Ferner ist zu erkennen, daß die Charakteristik in bezug auf die zentrale Wählposition 48 nicht symmetrisch ist. Im Gegensatz zu herkömmlichen Rückstelleinrichtungen ist die Charakteristik ergonomisch optimiert.

Zum Bewegen des Gangwechselhebels 32 in die linke Wählposition 46 ist bis zu einem Wählweg W von etwa zehn Millimetern nur ein geringer Anstieg der Gegenkraft F zu verzeichnen. Diese Kurve flacht dann noch weiter ab, und es ergibt sich ein nahezu horizontaler Verlauf im Bereich zwischen etwa minus fünfzehn und minus dreißig Millimetern. Dieser erste Teil der Charakteristik ist in Fig. 2 mit 82 bezeichnet.

Erst bei Wählwegen über minus dreißig Millimeter steigt die Gegenkraft F stark an, was bei 84 gezeigt ist. Bei minus fünfunddreißig Millimetern ist ein mechanischer Anschlag o.ä. vorgesehen.

Man erkennt, daß die Charakteristik 70 in dem Bereich 82 nicht linear verläuft. Der Fahrer erfährt dies dadurch, daß er zunächst eine zwar geringe doch merkliche Wählkraft aufbringen muß. Diese Wählkraft steigt jedoch ab einem gewissen Wählweg (etwa minus 10 bis minus fünfzehn Millimeter) nicht mehr erheblich an. Somit wird dem Fahrer zwar anfangs vermittelt, daß er eine Wählbewegung vollzieht. Über den gesamten Verlauf der Wählbewegung bis zum Erreichen der Wählposition 46 steigt die Kraft jedoch nicht weiter linear an, sondern bleibt auf einem vergleichsweise niedrigen Niveau.

Die Kennlinie 70 für den Wählweg von der zentralen Wählposition zu der rechten Wählposition 50 ist dazu nicht symmetrisch. Hierbei steigt die Gegenkraft F in einem ersten Bereich 72 zunächst relativ stark an (bis hin zu etwa fünfzehn Millimetern), bis eine maximale Gegenkraft 74 bei etwa fünfzehn Millimetern erreicht ist. Anschließend fällt die Kennlinie wieder ab, was in Fig. 2 bei 76 gezeigt ist, bis hin zu einem Minimum 78 bei etwa dreißig Millimetern Wählweg. Über das Minimum 78 hinaus steigt die Gegenkraft F wiederum stark, was bei 80 gezeigt ist.

Der relativ starke Anstieg der Gegenkraft F im Bereich 72 vermittelt dem Fahrer deutlich, daß er im Begriff ist, den Wählweg von der Position 48 in die Position 50 einzuschlagen. Folglich kann der Fahrer durch diese vergleichsweise starke Gegenkraft schnell erkennen, ob er tatsächlich im Begriff ist, die Schaltgasse 40 für den fünften Gang anzuwählen, oder ausgehend vom vierten Gang in den dritten Gang schaltet. Wäre dieser Verlauf flacher, wie bspw. zum Einlegen des ersten bzw. zweiten Ganges, könnte der Fahrer gerade bei schnellen Schaltvorgängen nicht deutlich zwischen einem Einlegen des dritten und des fünften Ganges unterscheiden.

Ab etwa der Hälfte des Weges sollte der Fahrer realisiert haben, daß er im Begriff ist, den fünften Gang einzulegen. Ab diesem Zeitpunkt wird ihm das weitere Wählen leichter gemacht, indem die von der Rückstelleinrichtung 58 aufgebrachte Gegenkraft F wieder abfällt. Folglich kann der Fahrer auch den fünften Gang ohne größere Anstrengung einlegen.

Die in Fig. 2 gezeigte Charakteristik läßt sich auf beliebige Art und Weise realisieren.

Ferner ist es erfindungsgemäß möglich, auch andere Kennlinien zu realisieren, die an den jeweiligen Einsatzzweck angepaßt sind. So könnte es bei manchen Anwendungsfällen bspw. denkbar sein, die Charakteristik symmetrisch in bezug auf die zentrale Wählposition auszubilden, wobei die jeweiligen spiegelbildlichen Abschnitte jeweils nichtlineare Verläufe besitzen, ähnlich dem Verlauf 82, 84. Genau so könnte jeder der spiegelbildlichen Abschnitte auch einen Verlauf besitzen, wie er in Fig. 2 durch die Abschnitte 72 bis 78 gekennzeichnet ist.

Bei einer asymmetrischen Auslegung ist es auch denkbar, daß die Charakteristik zum Erreichen einer der Schaltgassen 36, 40 aus der zentralen Wählposition 48 heraus nicht linear ist, zum Erreichen der anderen Schaltgasse 40, 36 hingegen eine lineare Charakteristik realisiert ist.

Sofern die Charakteristik 70 asymmetrisch ist, kann die Asymmetrie zumindest teilweise dadurch implementiert sein, daß die Federn 60A, 60B unterschiedliche Federelastizitäten besitzen.

Falls bspw. lediglich zwei unterschiedliche Federn 60A, 60B verwendet werden, würde sich zu beiden Seiten der zentralen Wählposition 48 jeweils eine lineare Kennlinie 70 ergeben, jedoch mit einer unterschiedlichen Steigung.

Um eine komplexe Kennlinie wie die in Fig. 2 gezeigte Charakteristik zu realisieren, weist die Rückstelleinrichtung 58 vorzugsweise ein Kurvengetriebe 90 auf, wie es in Fig. 3 beispielhaft dargestellt ist, oder ein Ersatz-Gelenkgetriebe.

Fig. 3 zeigt folglich eine modifizierte Ausführungsform einer Rückstelleinrichtung 58' der erfindungsgemäßen Gangwechselvorrichtung.

Das Kurvengetriebe 90 weist ein zentrales Koppelelement 92 auf, das getrieblich mit dem Gangwechselhebel 32 gekoppelt ist, was aus Übersichtlichkeitsgründen in Fig. 3 nicht dargestellt ist.

In Fig. 3 ist jedoch zu erkennen, daß das Koppelelement 92 entsprechend dem Wählweg W ausgehend aus einer zentralen Position (entsprechend der zentralen Wählposition 48) nach links oder rechts ausgelenkt wird. Die Auslenkung kann dabei linear erfolgen oder eine Schwenkbewegung sein.

Etwa symmetrisch zu dem Koppelelement 92 sind zwei gegenüberliegende Spiralfedern 94 vorgesehen, die an einem Ende gehäusefest angeordnet sind und am anderen Ende jeweils eine Rolle 96 drehbar gelagert tragen.

Die Rollen 96 drücken von gegenüberliegenden Seiten auf das Koppelelement 92, und zwar gegen eine an einer Außenkontur des Koppelelements 92 realisierte Kurve 93A bzw. eine gegenüberliegend realisierte Kurve 93B.

Ferner ist jeder der Spiralfedern 94 ein Anschlag 98 zugeordnet, so daß bei einer Auslenkung des Koppelelementes 92 aus der zentralen Position 48 jeweils nur eine der Rollen 96 an dem Koppelelement 92 anliegt. Auf diese Weise kann für jede Wählrichtung eine exakt von nur einer Federkennlinie abhängige Charakteristik von Gegenkraft zu Wählweg eingerichtet werden. Diese Charakteristik wird im wesentlichen bestimmt durch den Verlauf der Kurven 93A bzw. 93B. Es lassen sich beliebige derartige Charakteristiken realisieren, bspw. die in Fig. 2 gezeigte Charakteristik.

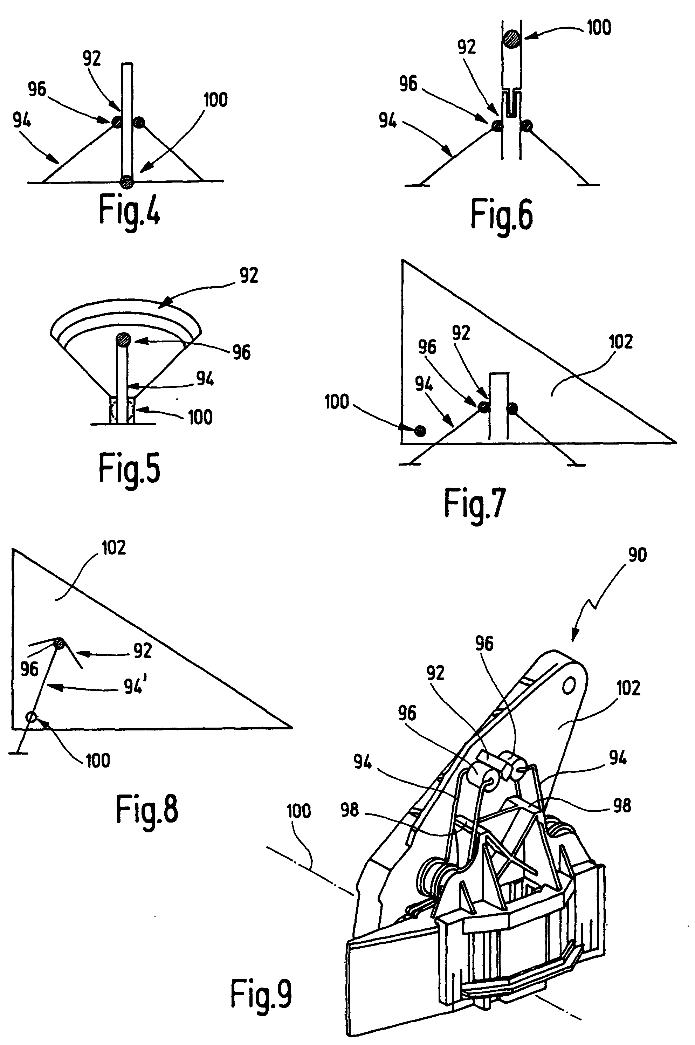

Alternative Ausführungsformen von Rückstelleinrichtungen sind in den Figuren 4 bis 8 gezeigt.

Fig. 4 zeigt ein Grundprinzip der Rückstelleinrichtung 58', wie es im wesentlichen bei der Ausführungsform 58' in Fig. 3 realisiert ist.

Das Koppelelement 92 ist um einen Drehpunkt 100 drehbar. Zu beiden Seiten des Koppelelementes 92 sind schematisch angedeutete Federn 94 mit endseitigen Rollen 96 vorgesehen. Der Verlauf von Kurven an dem Koppelelement 92 (in Fig. 4 nicht näher gezeigt) bestimmt die realisierbare Gegenkraft-Wählweg-Charakteristik.

In Fig. 4 sind die Federn 94, ähnlich wie in Fig. 3, geneigt in bezug auf die Anlagepunkte zwischen den Rollen 96 und dem Koppelelement 92 angeordnet, derart, daß sich in der Draufsicht etwa die Form eines Dreieckes ergibt. Der Drehpunkt 100 liegt dabei innerhalb dieses Dreiecks, vorzugsweise auf dessen Grundlinie.

Fig. 5 zeigt eine Draufsicht auf die Rückstelleinrichtung der Fig. 4, mit einem schematisch angedeuteten Kurvenverlauf.

Bei einer Modifikation, die in Fig. 6 gezeigt ist, liegt der Drehpunkt außerhalb des Dreieckes, ist jedoch symmetrisch hierzu angeordnet.

Fig. 7 zeigt eine weitere Modifikation einer Rückstelleinrichtung, bei der ein Drehpunkt 100 des Koppelelementes 92 außerhalb des oben beschriebenen Dreieckes aus zwei Federelementen 94 angeordnet ist, in diesem Fall jedoch nicht symmetrisch zu diesen. Bei dieser Ausführungsform läßt sich eine unsymmetrische Kennlinie allein aus der unsymmetrischen Anordnung des Drehpunktes 100 des Koppelelementes 92 realisieren.

Eine Modifikation einer Rückstelleinrichtung mit nur einer einzelnen Feder 94' ist in Fig. 8 gezeigt. Die Feder 94' trägt an ihrem Ende ebenfalls eine Rolle 96. Die Rolle 96 steht in Wirkverbindung und bildet ein Kurvengetriebe mit einem Koppelelement 92, das an einer Schwenkplatte 102 vorgesehen ist, die um einen Drehpunkt 100 verschwenkbar ausgebildet ist.

Es läßt sich erkennen, daß die in Fig. 2 gezeigte Charakteristik oder eine andere beliebige Charakteristik von Gegenkraft zu Wählweg durch eine Vielzahl unterschiedlicher Konstruktionen mit einem Kurvengetriebe (oder einem äquivalenten Getriebe) realisierbar ist.

Fig. 9 schließlich zeigt eine tatsächliche Implementierung eines Kurvengetriebes 90, dessen Funktion weitgehend der mit Bezug auf Fig. 3 beschriebenen Rückstelleinrichtung entspricht.

Man erkennt, daß das Koppelelement 92 als Vorsprung an einer Schwenkplatte 102 vorgesehen ist. Die Schwenkplatte 102 ist entlang einer Drehachse 100 verschwenkbar und ist getrieblich mit dem Gangwechselhebel (nicht dargestellt ) 32 gekoppelt. Wählbewegungen W des Gangwechselhebels 32 werden mittels der getrieblichen Kopplung in Schwenkbewegungen der Schwenkplatte 102 umgesetzt.

Seitlich neben der Schwenkplatte 102 sind zwei einander gegenüberliegende, sich gehäusefest einseitig abstützende Spiralfedern 94 vorgesehen. Die Spiralfedern sind an den nicht gehäusefest festgelegten Enden so gebogen, daß sie durch Rollen 96 hindurch greifen und die Rollen 96 hierdurch drehbar lagern. An dem gehäusefesten Teil sind gleichfalls Anschläge 98 vorgesehen, die in einem mittleren Bereich zwischen den zwei Enden der Spiralfeder 94 vorgesehen sind.

## Patentansprüche

1. Gangwechselvorrichtung (30) für ein handschaltbares Getriebe (16) eines Kraftfahrzeuges (10), mit
- einem Gangwechselhebel (32), der in einem H-Gangwechselschema (34) mit einer Wählgasse (44) und wenigstens drei Schaltgassen (36-42) beweglich ist und von einem Führer des Kraftfahrzeuges (10) betätigbar ist,
- einer Schalteinrichtung (52, 56), die mit dem Gangwechselhebel (32) gekoppelt ist und dazu dient, Schaltbewegungen (S) des Gangwechselhebels (32) innerhalb der jeweiligen Schaltgassen (36-42) zu dem Getriebe (16) zu übertragen,
- einer Wähleinrichtung (52, 54), die mit dem Gangwechselhebel (32) gekoppelt ist und dazu dient, Wählbewegungen (W) des Gangwechselhebels (32) innerhalb der Wählgasse (44) zu dem Getriebe (16) zu übertragen, und
- einer Rückstelleinrichtung (58), die den Gangwechselhebel (32) innerhalb der Wählgasse (44) in eine zentrale Wählposition (48) elastisch vorspannt, die einer mittleren (38) der wenigstens drei Schaltgassen (36-42) zugeordnet ist,
wobei die Rückstelleinrichtung (58) asymmetrisch ausgelegt ist, derart, daß einer Wählbewegung (W) des Gangwechselhebels (32) aus der zentralen Wählposition (48) je nach Wählrichtung eine andere Gegenkraft (F) entgegenwirkt, **dadurch gekennzeichnet, daß**
die Rückstelleinrichtung (58) wenigstens ein getrieblich mit dem Gangwechselhebel (32) gekoppeltes Element (92) und zwei elastisch daran anliegende Anlageelemente (96) aufweist, die ein Kurvengetriebe (90) zur Errichtung einer Gegenkraft-Wählweg-Charakteristik bilden, deren Verlauf eine Funktion des Kurvenverlaufs zwischen dem Koppelelement und den Anlageelementen (96) ist, wobei die Anlageelemente (96) an jeweiligen Federn (94) gelagert sind und von den Federn (94) in die zwei entgegengesetzten Wählrichtungen an das Koppelelement (92) elastisch angedrückt werden, und wobei für die Federn (94) jeweils ein Anschlag (98) vorgesehen ist, derart, daß bei Wählbewegungen (W) des Gangwechselhebels (32) ausgehend von der zentralen Wählposition (48) jeweils nur eine der Federn (94) auf den Gangwechselhebel (32) wirkt.

2. Gangwechselvorrichtung nach Anspruch 1, **dadurch gekennzeichnet, daß** die Schaltgassen (36-40) eine zentrale Schaltgasse (38) für die Gänge 3/4, die der zentralen Wählposition (48) entspricht, eine linke Schaltgasse (36) für die Gänge 1/2 entsprechend einer linken Wählposition (46) sowie eine rechte Schaltgasse (40) für wenigstens den 5. Gang entsprechend einer rechten Wählposition (50) aufweisen.

3. Gangwechselvorrichtung nach Anspruch 1 oder 2, **dadurch gekennzeichnet, daß** die Rückstelleinrichtung (58) eine Gegenkraft-Wählweg-Charakteristik (70) für den Gangwechselhebel (32) einrichtet, die in wenigstens einer der Wählrichtungen über den Wählweg zwischen der zentralen Wählposition und der jeweiligen Schaltgasse nichtlinear ist.

4. Gangwechselvorrichtung nach einem der Ansprüche 1 bis 3, **dadurch gekennzeichnet, daß** die Rückstelleinrichtung (58) eine Gegenkraft-Wählweg-Charakteristik (70) für den Gangwechselhebel (32) einrichtet, die so ausgelegt ist, daß einer Wählbewegung (W) des Gangwechselhebels (32) zu einer linken Wählposition (46) hin eine geringere Gegenkraft (F) entgegengesetzt wird als zu einer rechten Wählposition (50) hin.

5. Gangwechselvorrichtung nach einem der Ansprüche 1 bis 4, **dadurch gekennzeichnet, daß** die Rückstelleinrichtung (58) eine Gegenkraft-Wählweg-Charakteristik (70) für den Gangwechselhebel (32) einrichtet, die so ausgelegt ist, daß die Gegenkraft (F) bei einer Wählbewegung (W) des Gangwechselhebels (32) zu einer, vorzugsweise der rechten Wählposition (50) hin zunächst mit dem Wählweg (W) ansteigt und noch vor Erreichen der Schaltgasse (40) wieder abfällt.

6. Gangwechselvorrichtung nach Anspruch 1, **dadurch gekennzeichnet, daß** die Anlageelemente (96) jeweils eine drehbar gelagerte Rolle (96) aufweisen.

7. Gangwechselvorrichtung nach einem der Ansprüche 1 bis 8, **dadurch gekennzeichnet, daß** der Kurvenverlauf des Kurvengetriebes (90), die Beweglichkeit des Koppelelementes (92) und die elastische Lagerung der Anlageelemente (96) so ausgelegt sind, daß sich bei einer Wählbewegung (W) ein nichtlinearer Kraftverlauf (F) einstellt.

## Claims

1. Gearchange device (30) for a manual gearbox (16) of a motor vehicle (10), with a gearshift lever (32) which is movable within an H gearchange layout (34) with a selection track (44) and at least three shift tracks (36-42) and is operable by a driver of the motor vehicle (10),
a shift device (52, 56) which is coupled with the gearshift lever (32) and serves to transmit shift movements (S) of the gearshift lever (32) within the respective shift tracks (36-42) to the gearbox (16),
a selection device (52, 54) which is coupled with the gearshift lever (32) and serves to transmit selection movements (W) of the gearshift lever (32) within the selection track (44) to the gearbox (16), and
a restoring device (58) which elastically preloads the gearshift lever (32) within the selection track (44) in a central selection position (48) assigned to a middle track (38) of the at least three shift tracks (36-42),
wherein the restoring device (58) is asymmetrically designed so that a selection movement (W) of the gearshift lever (32) away from the central selection position (48) is counteracted by a different counterforce (F) depending on the selection direction,
**characterized in that**
the restoring device (58) has at least one element (92) kinematically coupled with the gearshift lever (32) and two abutting elements (96) elastically abutting the said element (92) which form a cam mechanism (90) yielding a counterforce/selection-path characteristic with a curve which is a function of the cam profile between the coupling element and the abutting elements (96), the abutting elements (96) being mounted on respective springs (94) and pressed elastically on to the coupling element (92) by the springs (94) in the two opposite selection directions, and a limit stop (98) being provided for each of the springs (94) so that only one of the springs (94) acts on the gearshift lever (32) at any one time during selection movements (W) of the gearshift lever (32) away from the central selection position (48).

2. Gearchange device according to Claim 1, **characterized in that** the shift tracks (36-40) comprise a central shift track (38) for the gears 3/4 which corresponds to the central selection position (48), a left shift track (36) for the gears 1/2 corresponding to a left selection position (46), and a right shift track (40) for at least the 5th gear corresponding to a right selection position (50).

3. Gearchange device according to Claim 1 or Claim 2, **characterized in that** the restoring device (58) yields a counterforce/selection-path characteristic (70) for the gearshift lever (32) that is non-linear in at least one of the selection directions over the selection path between the central selection position and the shift track concerned.

4. Gearchange device according to any one of Claims 1 to 3, **characterized in that** the restoring device (58) yields a counterforce/selection-path characteristic (70) for the gearshift lever (32) that is devised so that a selection movement (W) of the gearshift lever (32) towards a left selection position (46) is opposed by a smaller counterforce (F) than is a movement to a right selection position (50).

5. Gearchange device according to any one of Claims 1 to 4, **characterized in that** the restoring device (58) yields a counterforce/selection-path characteristic (70) for the gearshift lever (32) that is devised so that the counterforce (F) during a selection movement (W) of the gearshift lever (32) towards one selection position, preferably the right selection position (50), at first increases with the selection path (W) but then falls again before the shift track (40) is reached.

6. Gearchange device according to Claim 1, **characterized in that** each abutting element (96) has a rotatably mounted roller (96).

7. Gearchange device according to any one of Claims 1 to 8, **characterized in that** the cam profile of the cam mechanism (90), the freedom of movement of the coupling element (92) and the elastic mounting of the abutting elements (96) are devised so that an non-linear force curve (F) is established during a selection movement (W).

## Revendications

1. Dispositif de changement de vitesse (30) pour une boîte de vitesses manuelle (16) d'un véhicule automobile (10) avec
- un levier de changement de vitesse (32) qui est mobile dans un schéma de changement de vitesse en forme de H (34) avec une voie de sélection (44) et au moins trois voies d'enclenchement (36 à 42) et qui peut être actionné par un conducteur du véhicule automobile (10).
- un dispositif d'enclenchement (52, 56) qui est couplé avec un levier de changement de vitesse (32) et qui sert à transmettre les mouvements d'enclenchement (S) du levier de changement de vitesse (32) à l'intérieur des voies d'enclenchement (36 à 42) respectives vers la boîte de vitesses (16).
- un dispositif de sélection (52, 54) qui est couplé avec le levier de changement de vitesse (32) et qui sert à transmettre les mouvements de sélection (W) du levier de changement de vitesse (32) à l'intérieur de la voie de sélection (44) vers la boîte de vitesses (16), et
- un dispositif de rappel (58) qui précontraint de manière élastique le levier de changement de vitesse (32) à l'intérieur de la voie de sélection (44) dans une position de sélection centrale (48) qui correspond à une voie centrale (38) des trois voies d'enclenchement (36 à 42),
le dispositif de rappel (58) étant asymétrique de telle sorte qu'à un mouvement de sélection (W) du levier de changement de vitesse (32) hors de la position de sélection centrale (48) selon la direction de sélection, une autre force contraire (F) est opposée, **caractérisé en ce que** le dispositif de rappel (58) comprend au moins un élément (92) couplé avec le levier de changement de vitesse (32) et deux éléments d'appui (96) qui s'appuient de manière élastique sur celui-ci, et qui constituent une boîte de vitesses à cames (90) pour l'établissement d'une caractéristique force opposée-trajet de sélection, dont le tracé est une fonction du tracé de la courbe entre les éléments de couplage et les éléments d'appui (96), les éléments d'appui (96) étant logés sur des ressorts (94) respectifs et sont comprimés par les ressorts (94) dans les deux directions de sélection opposées contre l'élément de couplage (92) et une butée (98) étant prévue pour les ressorts (94), de telle sorte que, pour des mouvements de sélection (W) du levier de changement de vitesse (32) à partir de la position de sélection centrale (48), seul un des ressorts (94) agit sur le levier de changement de vitesse (32).

2. Dispositif de changement de vitesse selon la revendication 1, **caractérisé en ce que** les voies d'enclenchement (36 à 40) comprennent une voie d'enclenchement centrale (38), pour les vitesses 3/4, qui correspond à la position de sélection centrale (48), une voie d'enclenchement gauche (36), pour les vitesses 1/2, qui correspond à une position de sélection gauche (46) ainsi qu'une voie d'enclenchement droite (40), pour au moins la cinquième vitesse, qui correspond à une position de sélection droite (50).

3. Dispositif de changement de vitesse selon la revendication 1 ou 2, **caractérisé en ce que** le dispositif de rappel (58) établit, pour le levier de changement de vitesse (32), une caractéristique force opposée-trajet de sélection (70) qui est non linéaire dans au moins une des directions de sélection sur le trajet de sélection entre la position de sélection centrale et la voie de sélection respective.

4. Dispositif de changement de vitesse selon l'une des revendications 1 à 3, **caractérisé en ce que** le dispositif de rappel (58) établit, pour le levier de changement de vitesse (32), une caractéristique force opposée-trajet de sélection (70) conçue de telle sorte qu'à un mouvement de sélection (W) du levier de changement de vitesse (32) vers une position de sélection gauche (46) est opposée une force contraire (F) plus faible que vers une position de sélection droite (50).

5. Dispositif de changement de vitesse selon l'une des revendications 1 à 4, **caractérisé en ce que** le dispositif de rappel (58) établit, pour le levier de changement de vitesse (32), une caractéristique force opposée-trajet de sélection (70) conçue de telle sorte que la force opposée (F), lors d'un mouvement de sélection (W) du levier de changement de vitesse (32) de préférence vers la position de sélection droite (50) augmente d'abord avec le trajet de sélection (W) et diminue à nouveau avant d'atteindre la voie d'enclenchement (40).

6. Dispositif de changement de vitesse selon la revendication 1, **caractérisé en ce que** les éléments d'appui (96) comprennent chacun un rouleau (96) logé de manière rotative.

7. Dispositif de changement de vitesse selon l'une des revendications 1 à 8, **caractérisé en ce que** le tracé de la boîte de vitesses à cames (90), la mobilité de l'élément de couplage (92) et le logement élastique des éléments d'appui (96) sont conçus de telle sorte qu'une force non linéaire (F) apparaît lors d'un mouvement de sélection (W).
